# EUROPEAN PATENT SPECIFICATION

(11) **EP 4 575 235 B1**
(45) Date of publication and mention of the grant of the patent: **18.11.2026**
(21) Application number: 24216733.6
(22) Date of filing: 02.12.2024
(51) Int. Cl.: F15B 3/00, F16J 1/00, F16J 1/12

(54) **PISTON AND ALTERNATIVE MACHINE COMPRISING SAID PISTON**
KOLBEN UND ALTERNATIVE MASCHINE MIT DIESEM KOLBEN
PISTON ET MACHINE ALTERNATIVE COMPRENANT LEDIT PISTON

(30) Priority: 22.12.2023 IT 202300027840
(43) Date of publication of application: 25.06.2025
(73) Proprietor: Vignali, Massimo, 47921 Rimini Emilia-Romagna (IT)
(72) Inventor: Vignali, Massimo, 47921 Rimini Emilia-Romagna (IT)
(74) Representative: Busca, Andrea

(56) References cited:
- DE-A1- 3 428 461
- FR-A1- 2 343 284

## Description

The present invention concerns a piston and alternative machine comprising said piston.

The invention has been made with particular reference to applications in the oleodynamic field, such as force multipliers, however, applications to any alternative piston machine, such as applications in the field of combustion engines, are not excluded.

### PRIOR ART

In the field of alternative piston machines, it is well known that in order to increase power, it is necessary to increase the size of the machine, particularly the cylinder bore and piston diameter. This is necessary to increase the surface area over which to apply pressure to generate the thrust force, according to the well-known law F=P*S where F is the force, P is the pressure and S is the surface area. DE 34 28 461 A1 discloses a piston machine with a series of tumbler structures, open on the operating **side.**

This practice, however, clearly has limitations that have been overcome through expensive ancillary devices, such as fuel injection and its electronic control in combustion engines, cylinder multiplication, etc.

The present invention aims to solve the problem of increasing the achievable force at the same applied pressure simply by a new geometry.

A further purpose of the present invention is to solve said problem by an easily and economically feasible geometry.

Another further purpose of the present invention is to solve said problem by means of a geometry that maintains the traditional alternative operation of the pistons.

### GENERAL INTRODUCTION

Technical problems are solved by a piston and alternative machine including at least one such piston as indicated in the attached claims.

### DETAILED DESCRIPTION

Further features and advantages of the present invention will best result from the following detailed description of its preferred forms of implementation, made with reference to the attached drawings and given for illustrative and non-limiting purposes. In such drawings:
- figure 1 shows schematically the head of a piston according to the present invention in perspective view;
- figure 2 shows a section according to plan II of figure 1 of the figure 1 head;
- figure 3 schematically shows a section of a piston head variant according to the present invention inserted into a cylinder of an alternative machine.

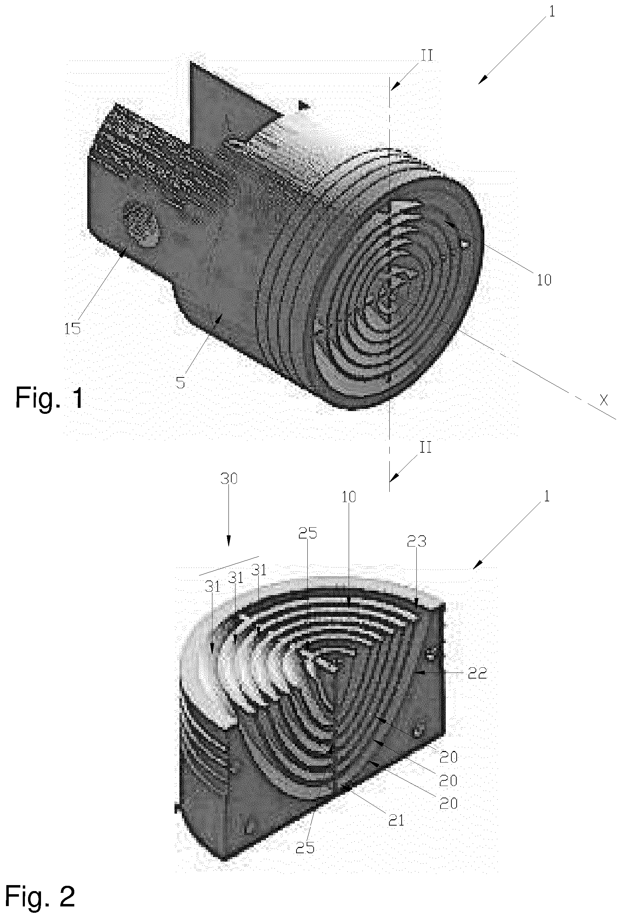

Shown in Figure 1 is a piston head according to the present invention indicated as a whole with reference number 1.

Piston head 1 has a longitudinal development along a median axis X, around which is defined a cylindrical wall 5 and orthogonally to which is defined at least one operating side 10 configured to receive the thrust of a pressurized fluid.

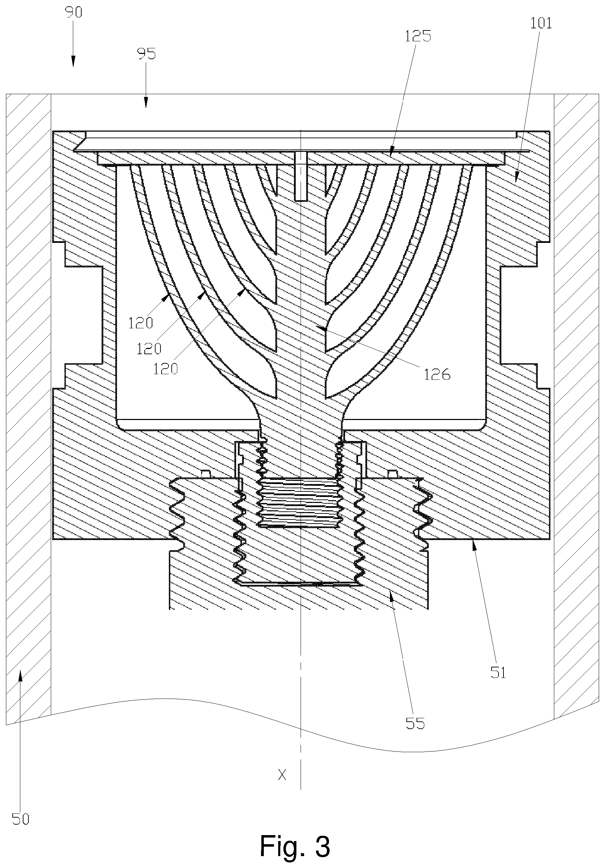

The median axis X therefore defines the direction of head sliding in a cylinder 50 (see variant of figure 3) of bore compatible with the diameter of cylindrical wall 5.

Only one operating side is shown in this description, thus suitable for a single-acting piston, however, two opposite operating sides are not excluded to make double-acting pistons.

With reference to figure 1, the side opposite to the operating side comprises means of attachment 15 to a connecting rod configured to transmit motion to a crank. Since these components are completely known, they are not further described and depicted.

As best shown in figure 2, the head 1 comprises a series of tumbler structures 20, comprising a bottom 21, at least one side wall 22 culminating in a top opening 23 opposite to the bottom, wherein said opening 23 faces the operating side 10, and the bottom is opposite to the opening 23 in the direction of the median axis X.

The top opening is the access for the inlet of pressurized fluid that is located in a chamber 95 of a cylinder into which the piston is slidingly inserted.

The tumbler structures 20 are each other of decreasing size in a manner that they are nested and spaced apart from each other. In this manner their openings 23 define on the operative side 10 an opening 30 split into nested openings 31 each for access to one of the tumbler structures 20.

The tumbler structures 20 are all rigidly connected to each other and to the cylindrical wall 5, e.g., by connecting wings 25. For example, the wings 25 are arranged to form a cross, intersecting at the median axis X.

According to some preferred forms of implementation, tumbler structures 20 are defined by surfaces of rotation about the median axis X, so nested openings 31 are in the shape of concentric rings.

For example, said rotation surfaces have a parabola-like generatrix with symmetry axis coincident with the median axis X.

With reference to figure 3, an alternative machine 90 comprising at least one cylinder 50 and at least one piston 51 slidingly inserted into said cylinder is shown in part, where said piston 51 comprises a head configured according to a variation of the previous figures.

Said variant is referred to as a whole by reference number 101 and differs from head 1 substantially in the configuration of the wings 125 joining the tumbler structures 120, which are limited to their top part, and in the presence of a central component 126 joining said structures. In addition, piston 51 includes a force-transmitting stem 55 rigidly attached to head 101, i.e., essentially without degrees of freedom with respect to it, and projecting outward from it parallel to the median axis X, so it is particularly suitable for machines for the transformation of a pressure into an alternating rectilinear motion, unlike head 1 in the previous figures, which is suitable for connection to a connecting rod and crank system for the generation of a rotary motion.

For example, machine 90 may be an oleodynamic machine, comprising a chamber 95 receiving pressurized fluid, into which head 101 is inserted.

All variants of connecting heads to any type of mechanism are of course covered, so that even head 1 can be modified for a connection with essentially no degrees of freedom to a component for the generation of alternating rectilinear motion, such as may be useful in an oleodynamic machine, e.g., a force multiplier.

Advantageously, the cylinder heads according to the present invention multiply the surface area over which the thrust pressure is exerted, so that with the same cylinder bore, a greater force than with conventional pistons can be exerted.

Advantageously, thrust increase is achievable in a simple and reliable manner.

The invention makes possible an increase in thrust force by means of a simple geometry, so it is economically feasible and compatible with any type of alternative machine and its management system, as well as with any head pressure application system, whether by combustion or oleodynamic.

Of course, the forms of actuation and variants described and illustrated thus far are for illustrative purposes only, and a branch engineer, in order to meet specific and contingent needs, may do numerous modifications and variants, including, for example, the combination of said implementation forms and variants, all of which, however, are comprised within the scope of protection of the present invention as defined by the following claims.

### GENERAL MEANING OF TERMS

In understanding the purpose of the present invention, the term "comprising" and its derivatives, as used herein, are intended as open-ended terms specifying the presence of the declared characteristics, elements, components, groups, integers and/or phases, but not excluding the presence of other undeclared characteristics, elements, components, groups, integers and/or phases. The above also applies to words with similar meanings such as the terms "including", "having" and their derivatives. In addition, the terms "part", "section", "portion", "member" or "element" when used in the singular may have the dual meaning of a single part or a plurality of parts. As used herein to describe the form(s) of implementation mentioned above, the following directional terms "forward", "backward", "above", "below", "vertical", "horizontal", "underneath" and "transverse", as well as any other similar directional terms refer to the form of implementation described in the operative position. Finally, grade terms such as "substantially", "about" and "approximately" as used herein mean a reasonable amount of deviation of the modified term such that the end result is not significantly changed.

While only selected implementation forms have been chosen to illustrate the present invention, from this description it will be clear to those expert in the field that various modifications and variations may be made without departing from the purpose of the invention as defined in the attached claims. For example, the size, shape, position or orientation of the various components may be modified as needed and/or desired. Components shown directly connected or in contact with each other may have intermediate structures interposed between them. The functions of one element can be performed by two and vice versa. The structures and functions of one form of implementation can be adopted in another one.

## Claims

1. Piston comprising a head (1) having a longitudinal development along a median axis X, around which is defined a cylindrical wall (5) and orthogonally to which is defined at least one operating side (10) configured to receive the thrust of a pressurized fluid, wherein the head (1) comprises a series of tumbler structures (20), open on the operating side (10) in such a way as to define an inlet of said pressurized fluid, and **characterized by** the fact that the tumbler structures are decreasing in size from each other in such a way as to be nested and spaced apart, where said tumbler structures are rigidly connected to each other.

2. Piston according to claim 1, **characterized by** the fact that each tumbler structure comprises a bottom (21), at least one side wall (22) culminating in a top opening (23) opposite to the bottom, wherein said opening (23) faces the operating side (10), and the bottom is opposite to the opening (23) in the direction of the median axis X.

3. Piston according to claim 2, **characterized by** the fact that the openings (23) of the tumbler structures define on the operating side (10) an opening (30) split into nested openings (31), each for access to one of the tumbler structures (20).

4. Piston according to any of the previous claims, **characterized by** the fact that the tumbler structures (20) are all rigidly connected to each other and to the cylindrical wall (5).

5. Piston according to claim 4, **characterized by** the fact that said rigid connection includes a plurality of connecting wings (25) between the tumbler structures, and between them and said cylindrical wall (5).

6. Piston according to claim 5, **characterized by** the fact that the wings (25) are arranged to form a cross, intersecting at the median axis X centerline.

7. Piston according to any of the previous claims, **characterized by** the fact that the tumbler structures (20) are defined by surfaces of rotation about the median axis X.

8. Piston according to claim 7, **characterized by** the fact that said rotation surfaces have a parabola-like generatrix with symmetry axis coincident with the median axis X.

9. Piston according to any of the previous claims, **characterized by** having at least two opposite operational sides (10) both comprising a respective set of said nested tumbler structures (20).

10. Piston according to any of the previous claims, **characterized by** the fact that it includes a force transmission component (55) projecting externally from said head (1, 101) and rigidly constrained to it, essentially without degrees of freedom, wherein said component (55) is parallel to the median axis **X.**

11. Alternative machine comprising at least one piston according to any of the previous claims.

12. Alternative machine according to claim 11, **characterized by** the fact that it is an oleodynamic machine comprising at least one chamber (95) of receiving pressurized fluid in which said piston is inserted.

13. Machine according to claim 12, **characterized by** the fact that it is an oleodynamic force multiplier.

14. Machine according to claim 12 or 13, **characterized by** the fact that the piston is double-acting.

15. Machine according to claim 14, **characterized by** the fact that the double-acting piston is of the type according to claim 9 or 10 when dependent on 9.

## Patentansprüche

1. Kolben umfassend einen Kopf (1), der eine Längserstreckung entlang einer Mittelachse X aufweist, um die eine zylindrische Wand (5) definiert wird und orthogonal zu dieser mindestens eine Betriebsseite (10) definiert wird, die dazu konfiguriert ist, den Schub eines unter Druck gesetzten Fluids aufzunehmen, wobei der Kopf (1) einen Satz von Becherstrukturen (20) umfasst, die auf der Betriebsseite (10) offen sind, sodass ein Einlass für das unter Druck gesetzte Fluid definiert wird, und **dadurch gekennzeichnet, dass** die Becherstrukturen ihre Größe zueinander reduzieren, um ineinandergefügt zu werden und voneinander beabstandet zu werden, wobei die Becherstrukturen starr miteinander verbunden sind.

2. Kolben nach Anspruch 1, **dadurch gekennzeichnet, dass** jede Becherstruktur einen Boden (21), mindestens eine Seitenwand (22) umfasst, die in eine obere Öffnung (23) mündet, die dem Boden gegenüberliegt, wobei die Öffnung (23) der Betriebsseite (10) zugewandt ist und der Boden der Öffnung (23) in Richtung der Mittelachse X gegenüberliegt.

3. Kolben nach Anspruch 2, **dadurch gekennzeichnet, dass** die Öffnungen (23) der Becherstrukturen auf der Betriebsseite (10) eine Öffnung (30) definieren, die in ineinandergefügten Öffnungen (31) unterteilt wird, die jeweils den Zugang zu einer der Becherstrukturen (20) ermöglicht.

4. Kolben nach einem der vorhergehenden Ansprüche, **dadurch gekennzeichnet, dass** die Becherstrukturen (20) alle miteinander und mit der zylindrischen Wand (5) starr verbunden sind.

5. Kolben nach Anspruch 4, **dadurch gekennzeichnet, dass** die starre Verbindung eine Mehrzahl von Verbindungsflügeln (25) zwischen den Becherstrukturen sowie zwischen diesen und der zylindrischen Wand (5) umfasst.

6. Kolben nach Anspruch 5, **dadurch gekennzeichnet, dass** die Flügel (25) angeordnet sind, sodass sie ein Kreuz bilden, das sich an der Mittellinie der Mittelachse X schneidet.

7. Kolben nach einem der vorhergehenden Ansprüche, **dadurch gekennzeichnet, dass** die Becherstrukturen (20) durch Drehflächen um die Mittelachse X definiert werden.

8. Kolben nach Anspruch 7, **dadurch gekennzeichnet, dass** die Drehflächen eine parabelartige Mantellinie mit einer Symmetrieachse aufweist, die mit der Mittelachse X zusammenfällt.

9. Kolben nach einem der vorhergehenden Ansprüche, **dadurch gekennzeichnet, dass** er mindestens zwei gegenüberliegende Betriebsseiten (10) aufweist, die beide jeweils einen Satz der ineinandergefügten Becherstrukturen (20) umfassen.

10. Kolben nach einem der vorhergehenden Ansprüche,
**dadurch gekennzeichnet, dass** er eine Kraftübertragungskomponente (55) umfasst, die aus dem Kopf (1, 101) nach außen vorsteht und im Wesentlichen ohne Freiheitsgrade starr an diesem befestigt wird, wobei die Komponente (55) parallel zu der Mittelachse X ist.

11. Alternative Maschine umfassend mindestens einen Kolben nach einem der vorhergehenden Ansprüche.

12. Alternative Maschine nach Anspruch 11, **dadurch gekennzeichnet, dass** sie eine Ölhydraulik-Maschine ist, die mindestens eine Kammer (95) zur Aufnahme des unter Druck gesetzten Fluids umfasst, in die der Kolben eingesetzt wird.

13. Maschine nach Anspruch 12, **dadurch gekennzeichnet, dass** sie ein Ölhydraulik-Kraftverstärker ist.

14. Maschine nach Anspruch 12 oder 13, **dadurch gekennzeichnet, dass** der Kolben doppeltwirkend ausgebildet ist.

15. Maschine nach Anspruch 14, **dadurch gekennzeichnet, dass** der doppeltwirkende Kolben von dem Typ nach Anspruch 9 oder 10 ist, wenn er von Anspruch 9 abhängt.

## Revendications

1. Piston comprenant une tête (1) présentant un développement longitudinal le long d'un axe médian X, autour duquel est définie une paroi cylindrique (5) et orthogonalement auquel est définie au moins un côté de fonctionnement (10) configuré pour recevoir la poussée d'un fluide sous pression,
la tête (1) comprenant une série de structures de gorge (20), ouvertes du côté de fonctionnement (10) de manière à définir une entrée dudit fluide sous pression, et
**caractérisé par le fait que** les structures de gorge présentent des tailles décroissantes les unes par rapport aux autres de manière à être emboîtées et espacées les unes des autres, où lesdites structures de gorge sont reliées rigidement les unes aux autres.

2. Piston selon la revendication 1, **caractérisé par le fait que** chaque structure de gorge comprend un fond (21), au moins une paroi latérale (22) culminant dans une ouverture supérieure (23) opposée au fond, ladite ouverture (23) étant tournée vers le côté de fonctionnement (10), et le fond étant opposé à l'ouverture (23) dans la direction de l'axe médian X.

3. Piston selon la revendication 2, **caractérisé par le fait que** les ouvertures (23) des structures de gorge définissent, du côté de fonctionnement (10), une ouverture (30) divisée en ouvertures emboîtées (31), chacune permettant l'accès à l'une des structures de gorge (20).

4. Piston selon l'une quelconque des revendications précédentes, **caractérisé par le fait que** les structures de gorge (20) sont toutes reliées de manière rigide les unes aux autres et à la paroi cylindrique (5).

5. Piston selon la revendication 4, **caractérisé par le fait que** ledit raccordement rigide comprend une pluralité d'ailettes de raccordement (25) entre les structures de gorge, et entre celles-ci et ladite paroi cylindrique (5).

6. Piston selon la revendication 5, **caractérisé par le fait que** les ailettes (25) sont agencées de manière à former une croix, se coupant au niveau de la ligne centrale de l'axe médian X.

7. Piston selon l'une quelconque des revendications précédentes, **caractérisé par le fait que** les structures de gorge (20) sont définies par des surfaces de rotation autour de l'axe médian X.

8. Piston selon la revendication 7, **caractérisé par le fait que** lesdites surfaces de rotation présentent une génératrice de type parabolique dont l'axe de symétrie coïncide avec l'axe médian X.

9. Piston selon l'une quelconque des revendications précédentes, **caractérisé en ce qu'**il comporte au moins deux côtés de fonctionnement opposées (10) comprenant chacun un ensemble respectif desdites structures de gorge (20) emboîtées.

10. Piston selon l'une quelconque des revendications précédentes,
**caractérisé par le fait qu'**il comprend un élément de transmission de force (55) faisant saillie extérieurement de ladite tête (1, 101) et rigidement fixé à celle-ci, essentiellement sans degrés de liberté, ledit élément (55) étant parallèle à l'axe médian X.

11. Machine alternative comprenant au moins un piston selon l'une quelconque des revendications précédentes.

12. Machine alternative selon la revendication 11, **caractérisée par le fait qu'**il s'agit d'une machine oléodynamique comprenant au moins une chambre (95), destinée à recevoir un fluide sous pression, dans laquelle ledit piston est inséré.

13. Machine selon la revendication 12, **caractérisée par le fait qu'**il s'agit d'un multiplicateur de force oléodynamique.

14. Machine selon la revendication 12 ou 13, **caractérisée par le fait que** le piston est à double action.

15. Machine selon la revendication 14, **caractérisée par le fait que** le piston à double action est du type selon la revendication 9 ou 10 lorsque dépendante de la revendication 9.
